# FASCICULE DE BREVET EUROPEEN

(11) **EP 0 524 115 B1**
(45) Date de publication et mention de la délivrance du brevet: **13.09.1995**
(21) Numéro de dépôt: 92420231.0
(22) Date de dépôt: 08.07.1992
(51) Int. Cl.: H01R 13/658

(54) **Réglette d'interconnexion, en particulier pour lignes téléphoniques ou informatiques**
Kontaktleister, insbesondere für Telefon- oder Datenleitungen
Multiple plug for interconnection, in particular for telephone or computer lines

(30) Priorité: 17.07.1991 FR 9109260
(43) Date de publication de la demande: 20.01.1993
(73) Titulaire: POUYET INTERNATIONAL, F-92400 Ivry sur Seine (FR)
(72) Inventeur: Bonvallat, Pierre, F-74300 Cluses (FR)
(74) Mandataire: Wind, Jacques

(56) Documents cités:
- EP-A- 0 338 187
- DE-A- 2 629 397
- DE-U- 8 517 809
- GB-A- 2 018 054
- US-A- 4 508 401

## Description

La présente invention se rapporte à une réglette d'interconnexion, en particulier pour lignes téléphoniques ou informatiques .

A titre d'état de la technique peut être cité le document EP-A-0.338.187 qui décrit entre autres une réglette de ce type. Cette réglette, en matériau isolant, est équipée de moyens de fixation sur un chassis métallique récepteur profilé qui est à la masse. Elle comporte, sur sa petite face avant, c'est-à-dire sur sa petite face qui se trouve à l'opposé de ce chassis récepteur lorsque la réglette est en place sur celui-ci, deux rangées parallèles de contacts métalliques autodénudants qui peuvent chacun recevoir l'âme conductrice d'un fil électrique. Selon ce document EP-A-0.338.187, la réglette peut, lorsque l'on désire y enficher un ou plusieurs modules de protection qui constituent l'objet de cette demande de Brevet Européen, coopérer avec un peigne métallique de mise à la masse qui s'enfiche, indépendamment de la réglette, sur ledit chassis profilé à l'instar de cette réglette. Le développement actuel des techniques téléphoniques et informatiques rend de plus en plus complexe la connectique qui accompagne nécéssairement la mise en oeuvre de ces techniques de plus en plus avancées.

Ces exigences ont pour conséquence une multiplication, sur une même installation de connectique, de réglettes assurant chacune une fonction spécifique, ce qui est particulièrement pénalisant en prix de revient et en encombrement des ensembles d'interconnexion de lignes.

L'invention vise à remédier à cet inconvénient. Elle se rapporte à cet effet à une réglette d'interconnexion, plus particulièrement pour lignes téléphoniques ou informatiques, cette réglette, dont le corps est en matériau isolant, étant équipée de moyen de fixation sur un chassis métallique récepteur profilé qui est à la masse, et comportant, sur sa petite face avant, c'est-à-dire sur sa petite face qui se trouve à l'opposé de ce chassis récepteur lorsque la réglette est en place sur celui-ci, deux rangées de contacts métalliques autodénudants qui peuvent chacun recevoir l'âme conductrice d'un fil électrique, et ladite réglette se caractérisant par le fait qu'elle comprend à la demande, de façon amovible ou non, outre des éléments fonctionnels (canaux passe-fils, modules techniques....) prévus pour se fixer sur ses grandes faces latérales, un ou plusieurs éléments fonctionnels additionnels particuliers, dont:
- un ou plusieurs contacts métalliques de masse latéraux et amovibles, aptes à recevoir chacun au moins un fil de mise à la masse, tel qu'un fil de "drain" de câble informatique, ce ou ces contacts métalliques amovibles étant conformés pour venir en appui conducteur contre le chassis métallique récepteur lorsque la réglette est en place sur ce dernier; et/ou au moins une demi-grille métallique longitudinale à dents, ou "peigne", venant se positionner sur le flanc de la réglette et sur laquelle peuvent être enfichées des poignées de cordons de brassage, cette demi-grille à dents étant conformée pour d'une part être reliée électriquement au chassis métallique précité lorsque la réglette est en place sur celui-ci et pour d'autre part assurer, via un contact électrique qui est respectivement complémentaire d'une dent de cette demi-grille et qui est prévu en conséquence dans la poignée du cordon de brassage, un contact de masse avec un fil de drain ou d'écran alors prévu dans le cable de ce cordon de brassage;
- et/ou une plaque métallique rigide et découpée en forme de peigne plat, ou un circuit imprimé d'interconnexion de contacts arrière de la réglette, l'un comme l'autre aptes à s'enficher solidement par l'arrière de la réglette dans une fente longitudinale prévue à cet effet dans cette dernière, de façon à venir s'insérer entre les plots dits "de coupure" normalement prévus dans le fond de cette réglette.

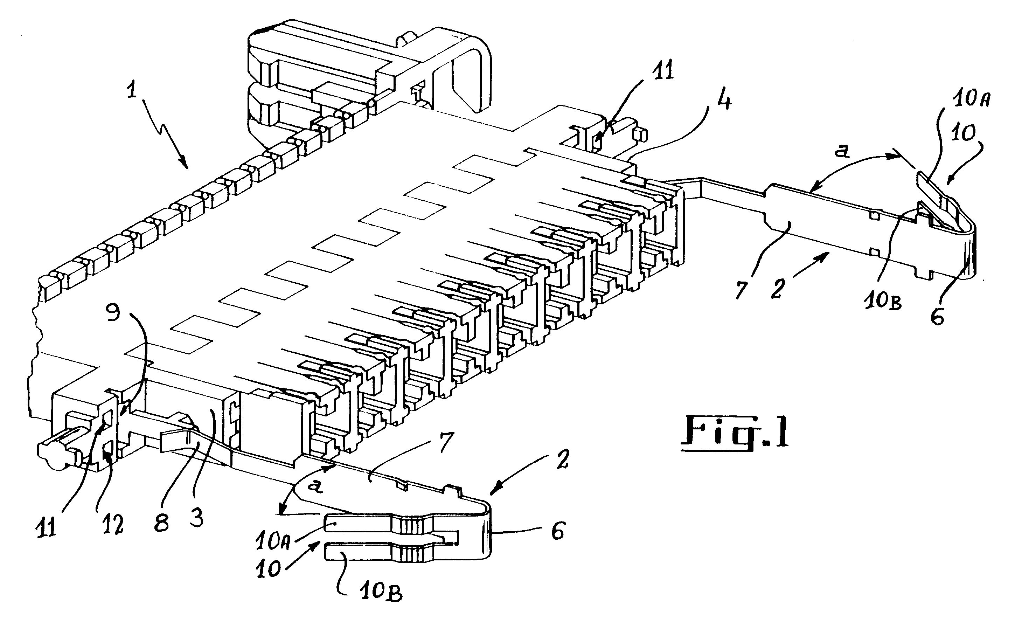

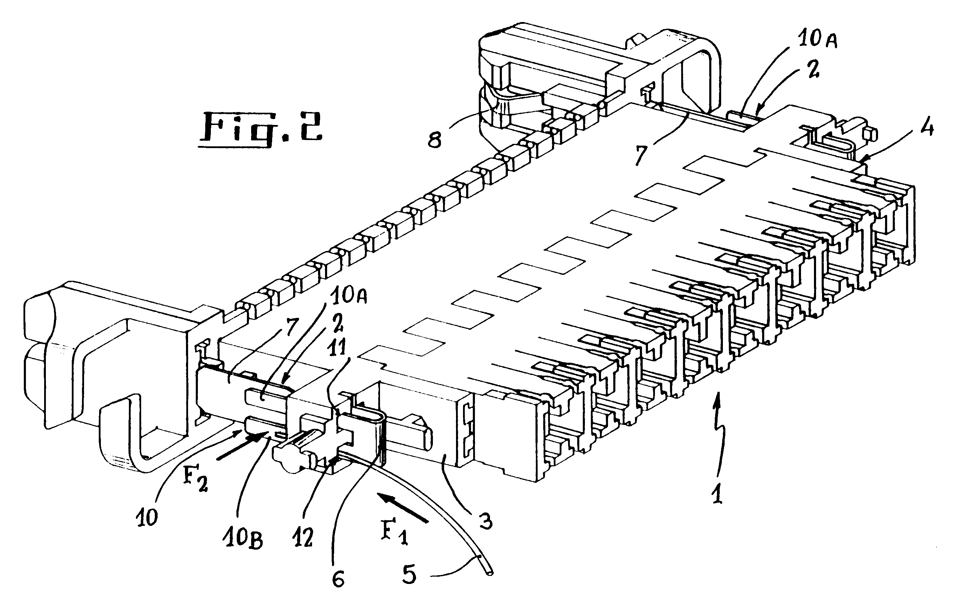

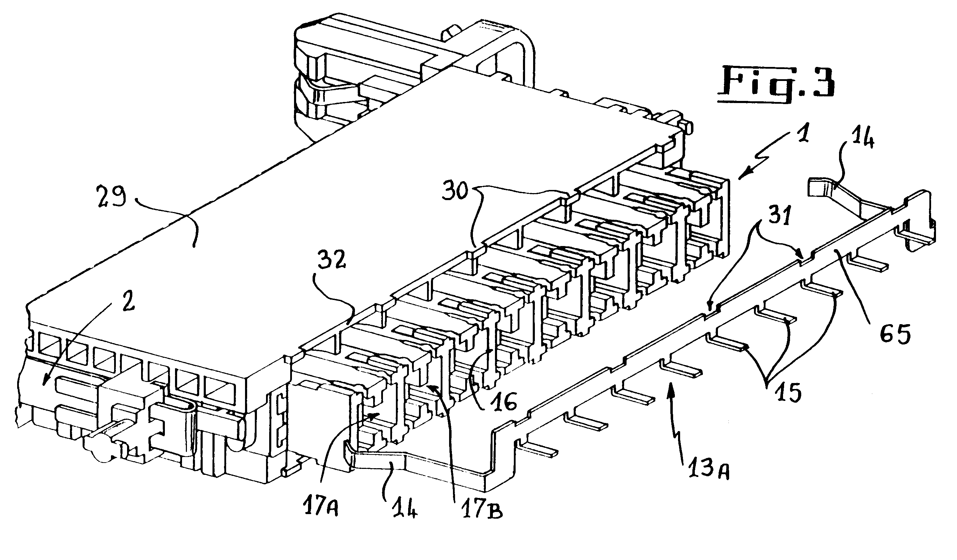

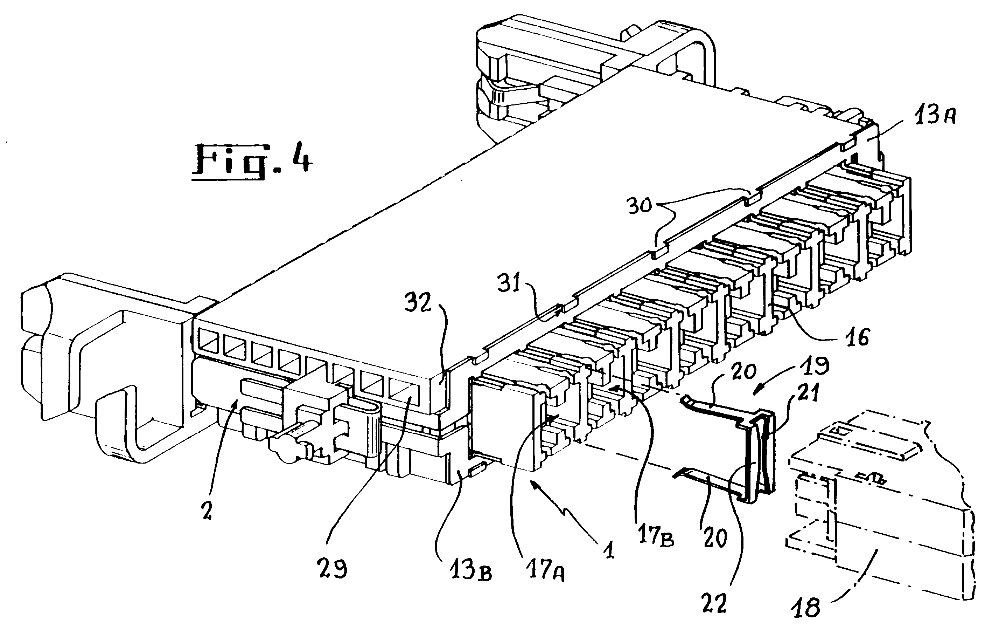

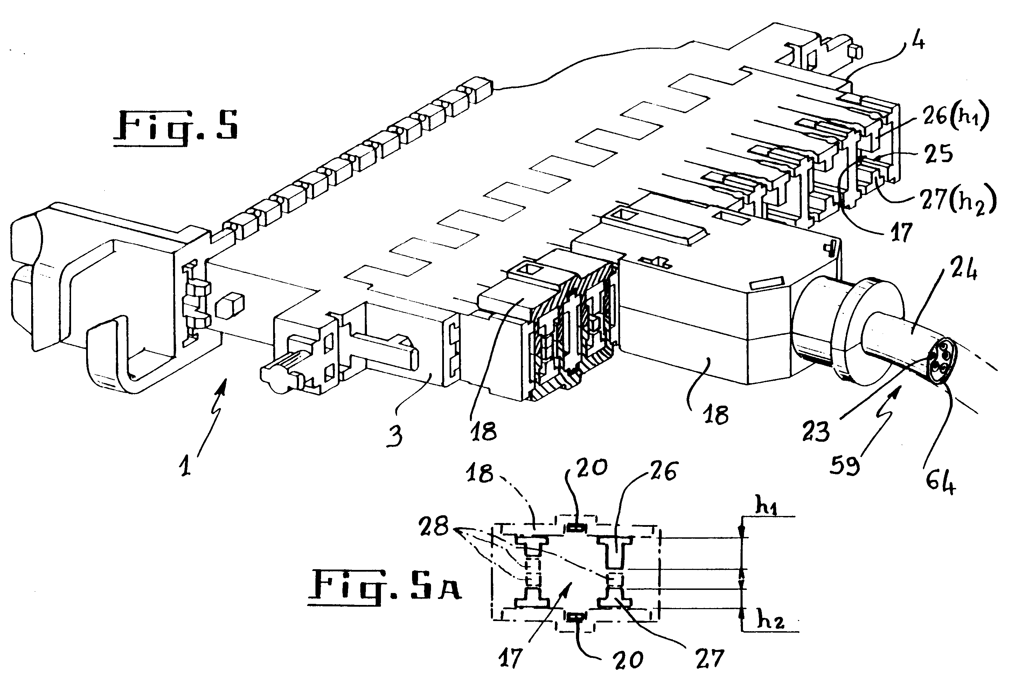

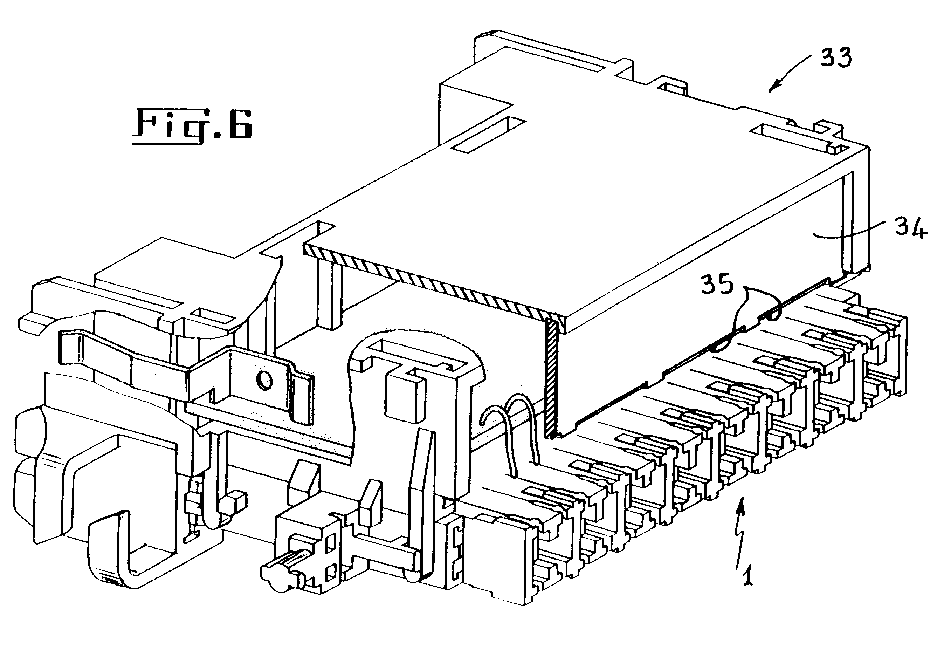

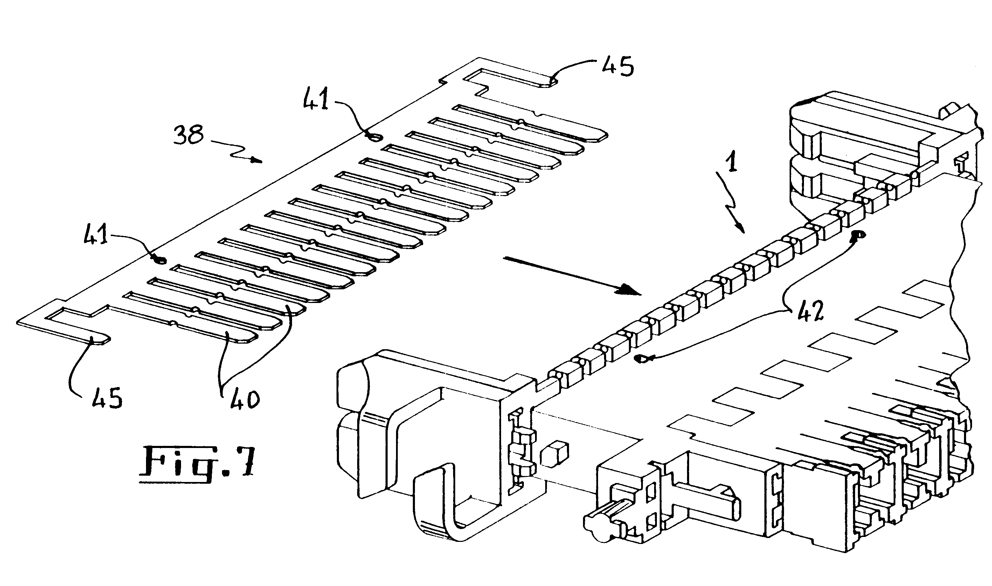

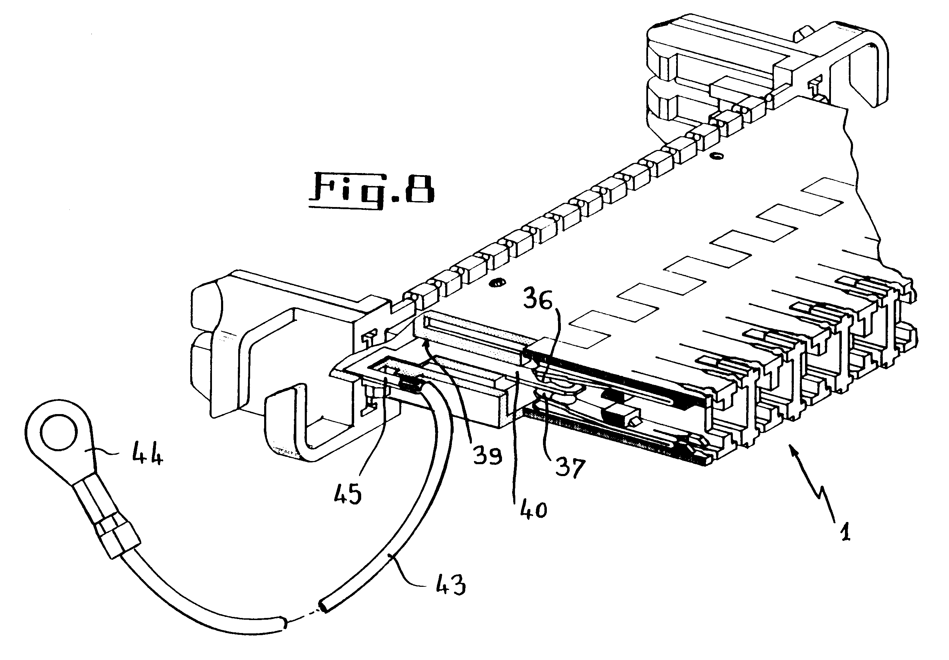

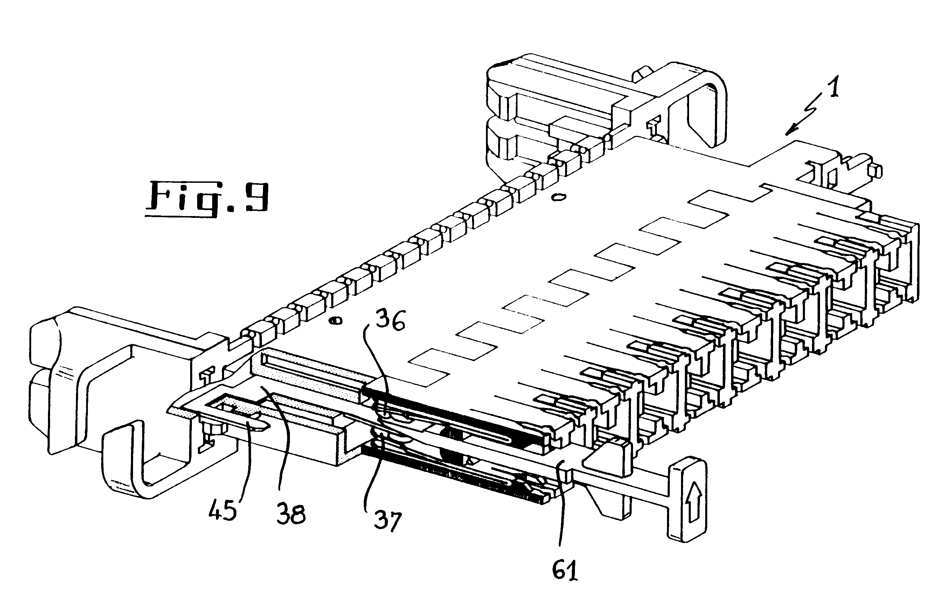

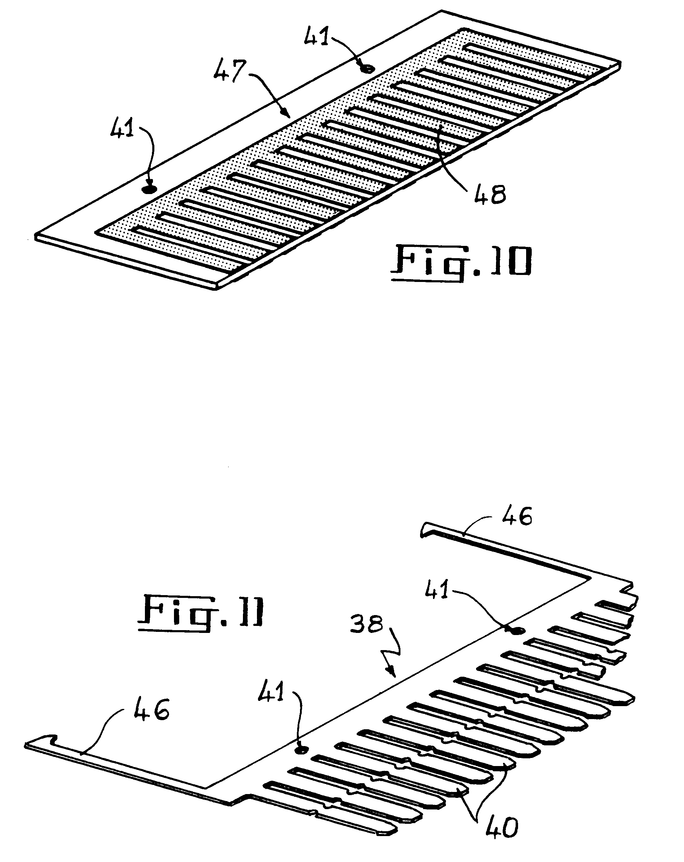

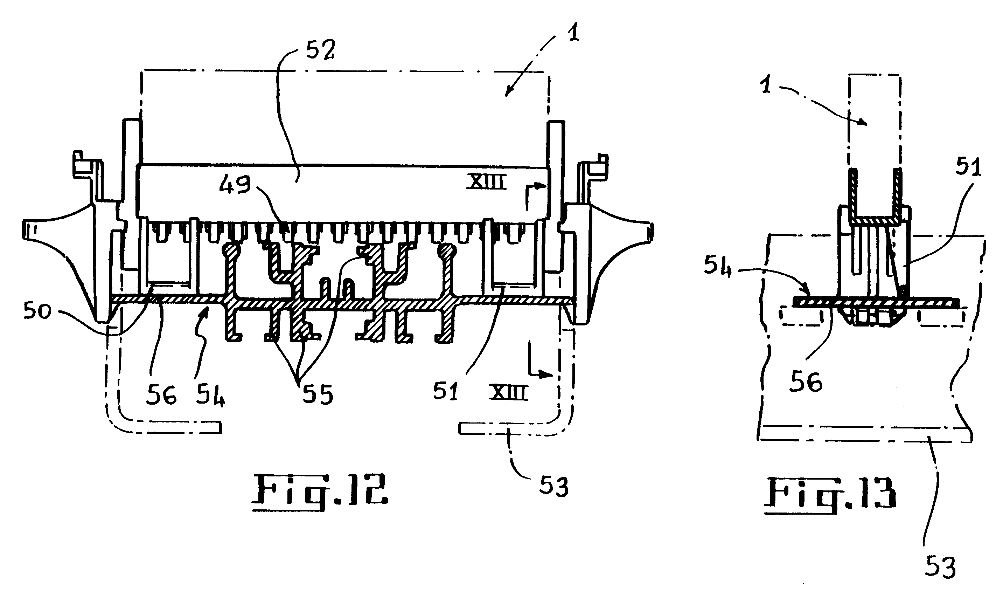

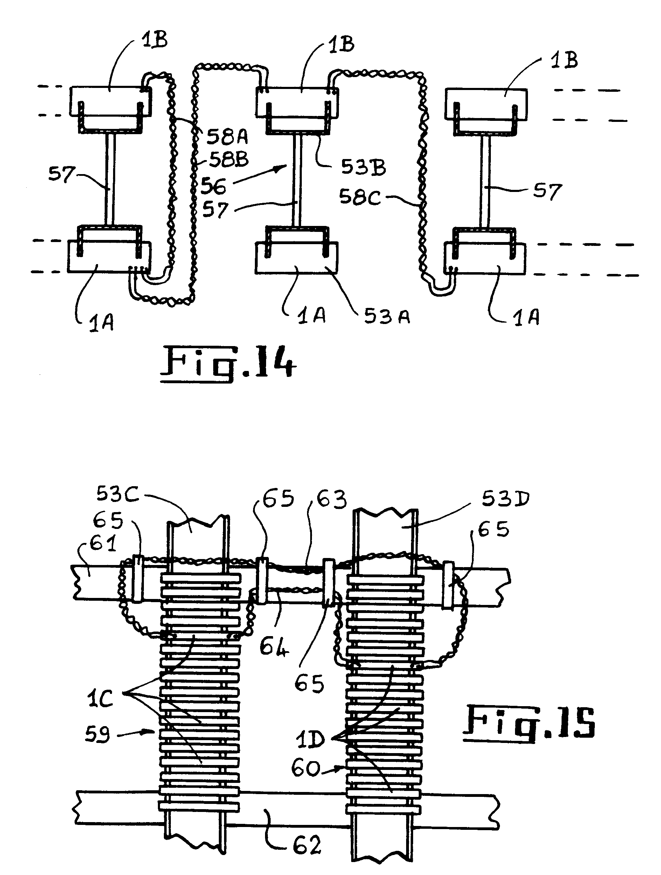

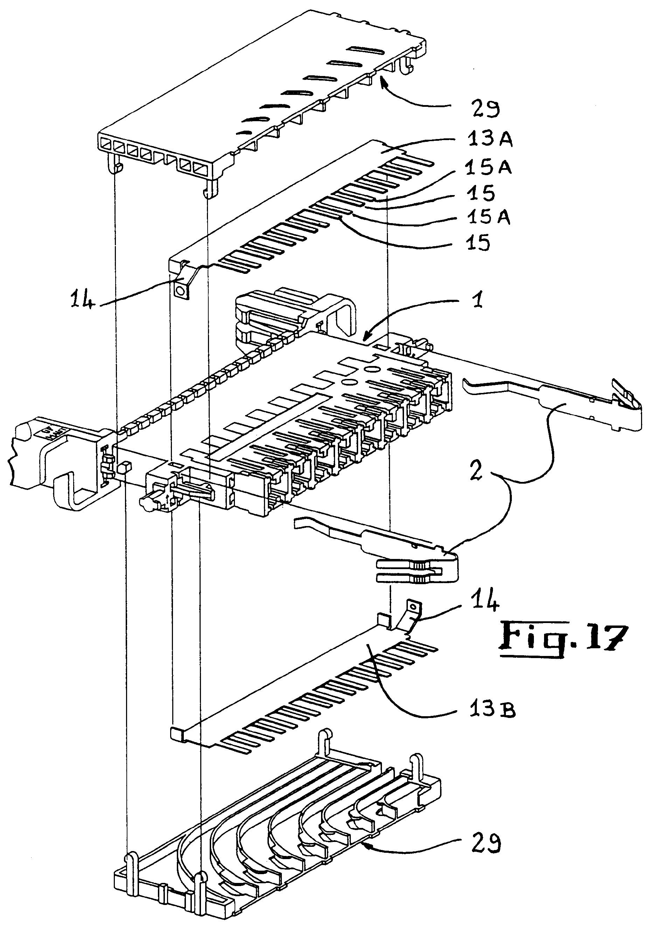

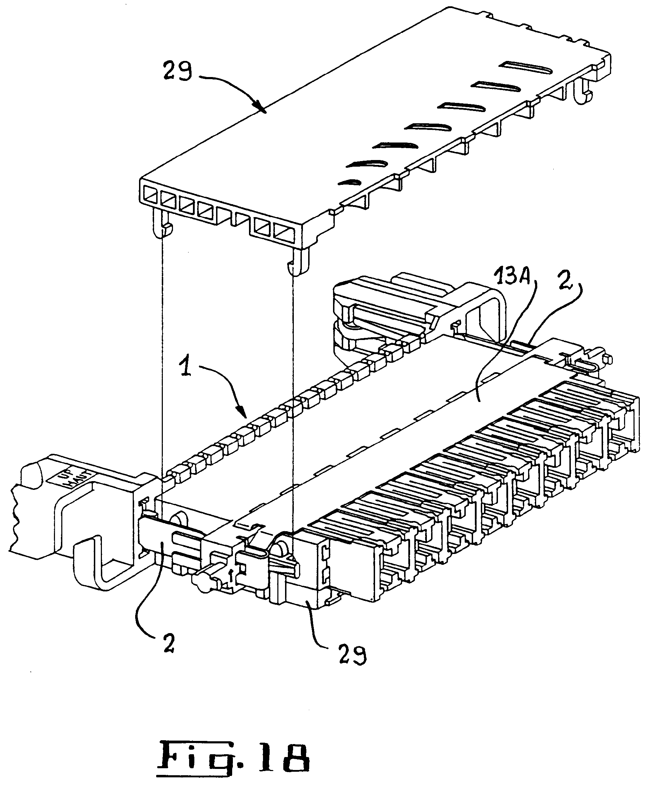

De toute façon, l'invention sera bien comprise, et ses avantages et autres caractéristiques ressortiront, lors de la description suivante d'un exemple non limitatif de réalisation de cette réglette multi-fonctions, en référence au dessin schématique annexé dans lequel :
. Figure 1 est une vue en perspective de cette réglette, avec deux contacts métalliques latéraux de connexion de drains prêts à être mis en place respectivement sur les deux côtés de cette réglette;
. Figure 2 montre cette même réglette avec ces deux contacts mis en place, et l'un deux recevant un fil de drain ;
. Figure 3 montre la réglette de Figure 2 prête à recevoir une demi grille à dents, et préalablement équipée de deux canaux passe-fils modifiés pour caler chacun une demi-grille de ce type;
. Figure 4 fait suite aux figures précédentes et montre de même façon cette réglette avec deux demi-grilles à dents installées et prêtes à recevoir des poignées de cordon de brassage adaptées en conséquence;
. Figures 5 et 5A montrent, avec écorchement partiel, comment est réalisé le détrompage d'une telle poignée de cordon de brassage;
. Figure 6 montre comment un module technique enclipsable sur cette réglette peut être lui-aussi modifié pour caler cette demi-grille à dents;
. Figure 7 montre un peigne métallique rigide de mise en court-circuit de tous les contacts de la réglette, ce peigne étant prêt à être enfiché à l'arrière de cette réglette;
. Figure 8 est une vue partiellement écorchée, montrant ce peigne mis en place dans la réglette;
. Figure 9 est une semblable à Figure 8, avec une fiche plastique d'isolement d'une des bornes de la réglette enfichée dans cette réglette;
. Figure 10 est une vue d'un exemple de circuit imprimé qui peut-être enfiché à la place de ce peigne métallique rigide;
. Figure 11 montre une variante de réalisation du peigne représenté en Figure 7;
. Figures 12 et 13 sont respectivement une vue en coupe latérale partielle en une vue en coupe selon XIII-XIII de Figure 12, de cette réglette montée sur deux chassis récepteurs de types très différents;
. Figures 14 à 16 sont des représentations grossières de trois modes d'implantation et de câblage de réglettes conformes à l'invention;
. Figures 17 et 18 sont respectivement une vue en perspective éclatée, et une vue en perspective presque tout monté, d'une variante de réalisation de cette réglette.

En se référant à la figure 1, cette nouvelle réglette multi-fonctions 1 est montrée ici totalement nue, et prête à recevoir tout d'abord deux contacts métalliques latéraux 2 de connexion, au chassis métallique récepteur (non-représenté), de fils de masse tels que les fils de "drain" qui équipent classiquement les cables de lignes informatiques. La Figure 2 montre ces deux contacts 2 enfichés le long de chaque bord latéral 3, 4 de la réglette 1, un fil de drain 5 étant alors mis en place contre le contact métallique 2.

Comme on le voit sur ces deux figures 1 et 2, il s'agit de deux contacts métalliques élastiques, un peu en forme d'épingle à cheveux comportant deux branches se raccordant sur un bord de pliure commun 6 et, au repos, formant entre elles un angle (a) faible mais non nul (de l'ordre de 10 à 20 degrès pour fixer les idées):
. une longue branche élastique principale 7 dont l'extrémité libre 8 est conformée pour venir, lorsque cette branche 7 est enfichée à fond (figure 2) et avec jeu à travers un alvéole récepteur 9 prévu à cet effet sur le bord latéral correspondant 3 de la réglette 1, en appui conducteur contre le chassis métallique récepteur de la réglette 1. Un tel chassis récepteur n'est pas représenté sur la réglette, mais il peut s'agir par exemple de l'un ou l'autre des chassis récepteurs 53 et 54 qui sont représentés sur les figures 12 et 13 qui seront décrites ultérieurement.
. Et une plus courte branche élastique 10, qui d'ailleurs dans cet exemple de réalisation se compose de deux branches parallèles et identiques 10A et 10B. Ces deux branches sont prévues pour s'enficher (figure 2) avec jeu à travers deux autres alvéoles récepteurs 11 et 12, parallèles à l'alvéole 9 et formés de moulage dans le corps de la réglette 1. Comme représenté clairement en figure 2, le drain 5 du cable informatique s'introduit par exemple dans l'alvéole 12 (après mise en place du contact 2) selon la direction F1, tandis que l'on appuie sur la patte élastique 10B selon la direction F2. On relâche ensuite cette patte 10B, et le contact électrique est alors établi entre le drain 5 et la patte 10B, c'est-à-dire, via la patte d'appui 8, entre ce drain 5 et le chassis métallique récepteur sur lequel la réglette 1 est supposée mise en place.

On obtient ainsi une mise à la masse des drains 5 qui ne nécessite pas de prévoir, comme c'est le cas habituellement, de réglette collectrice de drains. De plus, comme chaque drain 5 est aisément déconnectable de son alvéole récepteur tel que l'alvéole 12, la gestion de ces drains pour des opérations de test et/ou de dépannage se trouve grandement facilitée.

En se reportant maintenant aux figures 3 à 6, cette même réglette 1 peut aussi recevoir une ou deux demi-grilles métalliques à dents 13A, 13B (figures 3 et 4), ou "peignes" dont le rôle est d'assurer une continuité d'écran le long des cordons de brassage qui sont couramment utilisés pour réaliser des interconnexions entre deux réglettes placées sur deux chassis distincts.

Ces cordons de brassage, qu'il s'agisse de cordons "une paire", "deux paires", ou même "quatre paires", ne comportent habituellement pas de feuillard métallique formant écran, avec drain de mise à la masse pressé entre ce feuillard et la gaine extérieure tout le long du câble que comporte le cordon, comme c'est couramment le cas pour les cables informatiques.

L'invention remédie donc à cet inconvénient par deux dispositions concomitantes :
. D'une part par la présence de ces deux demi-grilles métalliques 13A et 13B qui sont chacune pourvues de deux contacts latéraux souples 14 chacun prévus pour s'enficher dans l'alvéole 9 qui reçoit déjà la branche principale 7 du contact latéral 2 précité, et donc en contact électrique avec cette branche 7. Cette demi-grille 13A ou 13B est alors de ce fait reliée à la masse que constitue le chassis récepteur, et ses dents 15 viennent, lorsque la demi-grille est mise en place sur la réglette (figures 3 et 4), reposer sur le dessus (ou le dessous) de la paroi verticale 16 (figure 4) qui sépare deux alvéoles consécutifs 17A, 17B récepteurs de paire(s) de la réglette,
. D'autre part par le fait que, de façon à coopérer de manière complémentaire avec une ou deux de ces dents 15, chaque poignée 18 de cordon de brassage 59 comporte (figures 4 à 5A) un contact métallique supplémentaire 19, en forme de U dans cet exemple d'exécution, qui définit deux pattes 20 prévues pour venir chevaucher étroitement ces deux dents superposées 15 (une sur chaque demi-grille 13A et 13B), assurant ainsi le contact électrique de masse lorsque cette poignée 18 est enfichée sur la réglette 1. Une fente de connexion rapide 21 est prévue sur la branche transversale 22 du contact 19 pour recevoir un fil de drain 23 qui est prévu,en association avec un feuillard métallique enroulé 64 formant écran, dans le câble 24 du cordon de brassage 59 (figure 5).

On constate alors qu'ainsi, sauf au niveau de la réglette 1 elle-même, la continuité d'écran est assurée tout le long du circuit.

A noter qu'en l'absence de contacts 2, les branches 14 de mise à la masse de chaque demi-grille 13A,13B peuvent être prévues plus longues pour venir, à l'instar des branches 8 précitées, s'appuyer en fin de course contre le chassis métallique récepteur.

A noter qu'en outre, comme montré en figures 5 et 5A, il est prévu, aussi bien sur la face supérieure 25 de la réglette 1 que dans la poignée 18 du cordon de brassage 59, des moyens de détrompage qui sont ici constitués par le fait que, un alvéole supérieur de la réglette 1 sur deux , les demi-parois médianes 26,27 de cet alvéole sont de hauteurs h1,h2 différentes, et que, de façon correspondante, il manque une des quatre excroissances normalement complémentaires 28 dans la poignée 18.

Les demi-grilles 13A,13B ne sont normalement pas bien calées sur la réglette si celle-ci est nue. C'est pourquoi, comme montré aux figures 4 et 6, il est prévu de les caler à l'aide d'éléments fonctionnels rapportés par enclipsage sur les grandes faces latérales de la réglette :
. Selon Figure 4, il est prévu deux canaux passe-fils 29 sur chaque flanc de la réglette 1 ces canaux passe-fils, basiquement très classiques, présentant cependant des excroissances 30 aptes à coopérer avec des encoches complémentaires 31 (figure 3) prévues à cet effet sur chaque demi-grille 13A ou 13B : la grille 13A par exemple est alors, une fois mise en place, calée en profondeur par la paroi latérale avant 32 du canal passe-fil 29, et calée latéralement par coopération de ces excroissances 30 avec ces encoches 31.
. Selon Figure 6 un module technique enclipsable 33 a sa petite paroi transversale supérieure 34 pourvue de longues encoches 35 qui sont prévues pour recevoir étroitement la partie transversale 65 (figure 3) du demi-peigne 13A, avec ses encoches précitées 31, assurant ainsi le maintien et le calage de ce demi-peigne 13A.

En se référant maintenant aux figures 7 à 11, la partie arrière de cette réglette est fendue sur presque toute sa longueur (fente 39) pour recevoir un élément plat et rigide qui vient alors s'insérer entre ses plots de coupure 36, 37 (figure 8).

Selon figures 7 à 9, on souhaite ainsi mettre tous les plots de la réglette 1 à la masse du chassis, pour par exemple créer ainsi une réglette collectrice de drains.

L'élément plat enfichable est alors une plaque métallique rigide 38 qui est découpée en forme de peigne, de sorte que, une fois ce peigne 38 enfiché par l'arrière de la réglette dans la fente réceptrice 39, chaque dent 40 de ce peigne s'insère, en les écartant, entre deux plots de coupure 36,37 du fond de la réglette.

On peut ainsi isoler, pour des besoins de tests par exemple, un plot donné, tel que le plot 37 par exemple (figure 9), en enfichant dans la réglette une fiche de coupure classique 61 en matière plastique.

A noter que pour éviter que le peigne 38 soit alors éjecté de la réglette, des moyens de solidarisation du peigne 38 et de la réglette 1 sont prévus, soit par la présence de perçages complémentaires, 41 sur le peigne et 42 sur la réglette, aptes à recevoir des goupilles de solidarisation, soit par le fait que la surface métallique du peigne 38 est garnie de petites excroissances anti-retour, ou "sapins".

Comme représenté en Figure 8, la mise à la masse du peigne 38 peut-être réalisée à l'aide d'un cordon 43, garni d'une cosse de mise à la masse 44, qui est alors soudé sur une des deux pattes latérales 45 du peigne 38, prévues à cette effet sur ce dernier.

En variante, comme représenté en Figure 11, ces pattes 45 peuvent être remplacées par deux contacts lyres 46, prévus pour venir en contact électrique élastique sur le chassis récepteur lorsque la réglette 1 est en place sur ce dernier.

En lieu et place du peigne métallique 38, il peut être prévu d'enficher dans la fente 39 une plaque rigide de circuit imprimé 47 (figure 10) dont la gravure conductrice 48 est par exemple prévue pour assurer un multiplexage d'alimentation continue : avec la double gravure "en peigne" représentée, si une tension d'alimentation continue est appliquée entre les plots de coupure 36 et 37 (figure 8) de la réglette 1, cette tension est multiplexée sur tous les autres couples semblables de plots de coupure de cette réglette.

Le caractère multi-fonctionnel de cette réglette ne s'arrête pas là, et les figures 12 et 13 montrent que sa base arrière 49 est munie de deux organes d'appui 50 et 51 qui sont prévus de moulage de part et d'autre de la partie centrale 52 de cette réglette 1 et largement écartés de celle-ci, de sorte qu'ainsi la réglette 1 peut être fixée par enclipsage sur des chassis métalliques récepteurs de formes très différentes, et en particulier:
. soit sur un chassis métallique récepteur 53 à section en "U";
. soit sur un chassis métallique récepteur 54 profilé, en forme de plaque plane 56 garnie dans sa partie centrale de hautes nervures longitudinales 55 de formes diverses.

Enfin, le fait que cette réglette peut à loisir être ou ne pas être équipée de canaux passe-fils 29 la rend indifféremment utilisable pour les différentes sortes de câblage classique des répartiteurs téléphoniques comportant de telles réglettes : câblage avant-arrière, câblage à plat, câblage symétrique.

La figure 14 montre, en vue très schématique de dessus, l'utilisation de réglettes (1) conformes à l'invention pour un répartiteur téléphonique de très grande capacité, à câblage dit "avant-arrière".

Comme il est bien connu, un tel répartiteur est constitué d'un plus ou moins grand nombre de "fermes" 56 qui sont composées chacune d'un chassis en "U" avant 53A et d'un chassis en "U" arrière 53B, ces deux chassis étant réunis par une ossature stable 57.

Chaque chassis avant 53A comporte un plus ou moins grand nombre de réglettes enfichables 1A conformes à l'invention, et chaque chassis arrière 53B comporte de même façon un plus ou moins grand nombre de réglettes enfichables 1B, toujours de ce même type.

Les liaisons électriques entre les réglettes 1B de la "face arrière" du répartiteur et les réglettes 1A de sa "face avant" sont classiquement réalisées à l'aide de paires de fils torsadés appelés "jarretières" 58A, 58B, 58C, ...

Comme on le voit sur le dessin, ces liaisons peuvent être indifféremment effectuées par une jarretière 58A qui sort et rentre sur le même côté (ici le côté droit) des deux réglettes 1A, 1B à connecter, ou par une jarretière, 58B ou 58C, qui sort sur un des côté d'une réglette 1A et rentre sur le côté opposé de la réglette 1B associée. Pour une utilisation de ce type, les réglettes 1A et 1B utilisées seront donc des réglettes conformes à l'invention mais soit ne comportant pas de canaux passe-fils 29, soit comportant, du moins pour les jarretières, des canaux passe-fils disposant de sorties symétriques.

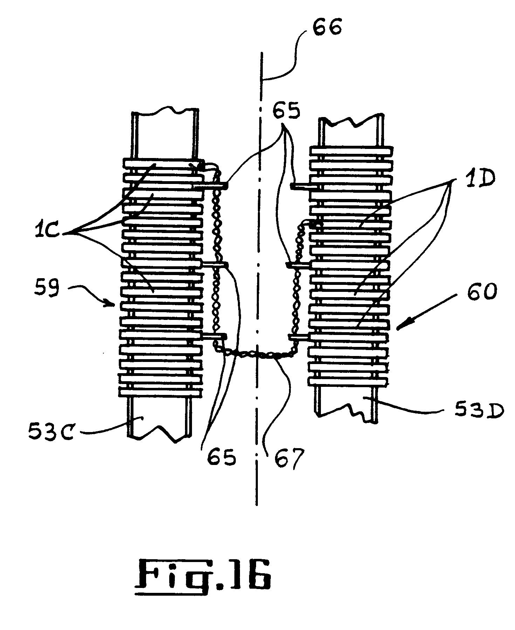

La figure 15 montre, en vue de face, l'utilisation de réglettes selon l'invention pour des répartiteurs de petite capacité, avec câblage dit "à plat ".

Ce répartiteur se compose de deux colonnes coplanaires de réglettes, dont une colonne d'arrivée 59 et une colonne de départ 60.

Chacune de ces colonnes est composée d'un chassis en "U", 53C ET 53D, qui reçoit les réglettes d'arrivée 1C et les réglettes de départ 1D, et qui est fixé sur deux traverses 61 et 62.

Les liaisons entre réglettes sont alors réalisées par des jarretières 63, 64, ..., qui passent toutes dans des anneaux de soutien 65 fixés sur la traverse supérieure 61, et qui relient des contacts situés sur une premiére moitié, gauche ou droite, d'une réglette 1C, à ceux symétriquement correspondants et situés sur l'autre moitié, respectivement donc droite et gauche, d'une réglette 1D.

Dans une telle configuration de câblage, les réglettes 1C et 1D conformes à l'invention seront à nouveau soit pas du tout équipées de canaux passe-fils 29, soit, en ce qui concerne les jarretières, équipées de canaux passe-fils disposant de sorties symétriques.

La figure 16 représente, de même façon qu'en figure 15, un répartiteur du même type, mais avec câblage dit "symétrique".

Dans un tel cas, les anneaux de soutien 65 ne sont pas placés sur les traverses précitées, mais sur les deux côtés en regard des colonnes 59 et 60, de part et d'autre de l'axe vertical de symétrie 66. Chaque jarretière 67 circule donc comme représenté dans les anneaux d'une colonne, puis dans les anneaux de l'autre colonne, et elle sort donc toujours du même côté (le côté droit) d'une réglette 1C de la colonne 59 pour entrer sur la réglette conjuguée 1D de la colonne 60 sur l'autre côté (le côté gauche) de cette dernière réglette. Dans ce cas de figure, le câble d'arrivée de la colonne de gauche arrive sur le coté gauche des réglettes alors qu'à contrario le câble de départ se situe à l'extrémité droite du répartiteur.

Les réglettes 1C et 1D conformes à l'invention seront alors avantageusement munies de canaux passe-fils 29 enclipsables, ces dernières étant avec sortie à droite pour les réglettes 1C et avec sortie à gauche pour les réglettes 1D.

Enfin, les figures 17 et 18 montrent une réglette de même type que précédemment, mais utilisant des demi-grilles à dents 13A, 13B, qui diffèrent des précédentes :
. par le fait qu'elles viennent se plaquer chacune contre une face latérale respective de la réglette 1, avec chacune un contact de mise à la masse latéral 14, de sorte qu'elles se positionnent en majeure partie sous les canaux passe-fils 29, qui les maintiennent ainsi positivement tout en s'opposant à leur extraction;
. et par le fait qu'une dent supplémentaire 15A est à chaque fois prévue entre chaque couple de dents de contact adjacentes 15 précédemment décrites, dans le but d'assurer un contact de masse pour en particulier un cordon de brassage ne comportant qu'une seule paire avec écran, le contact en U précité 20 étant alors placé au milieu en conséquence pour venir s'enficher sur les deux dents supplémentaires 15A correspondantes des deux grilles à dents 13A, 13B.

Comme il va de soi, l'invention n'est pas limitée à l'exemple de réalisation qui vient d'être décrit, et les caractéristiques multi-fonctionnelles de cette réglette ne sont nullement limitatives, qu'elles soient présentes seules ou en association avec d'autres.

## Revendications

1. Réglette d'interconnexion, en particulier pour lignes téléphoniques ou informatiques, cette réglette (1), dont le corps est en matériau isolant, étant équipée de moyens de fixation sur un chassis métallique récepteur profilé (53,54) qui est à la masse, et comportant, sur sa petite face avant (16,17A,17B), c'est-à-dire sur sa petite face qui se trouve à l'opposé de ce chassis récepteur (53,54) lorsque la réglette (1) est en place sur celui-ci, deux rangées de contacts métalliques autodénudants qui peuvent chacun recevoir l'âme conductrice d'un fil électrique, caractérisée en ce qu'elle comporte à la demande, outre des éléments fonctionnels du genre canaux passe-fils (29) ou modules techniques (33) qui sont prévus pour se fixer sur ses grandes faces latérales, un ou plusieurs éléments fonctionnels additionnels particuliers, dont:
. un ou plusieurs contacts métalliques de masse (2), latéraux et amovibles, aptes à recevoir chacun au moins un fil (5) de mise à la masse, ce ou ces contacts métalliques (2) étant conformés (8) pour venir en appui conducteur contre le chassis métallique récepteur (53,54) lorsque la réglette (1) est en place sur ce dernier;
. et/ou au moins une demi-grille métallique longitudinale (13A,13B) à dents (15), ou "peigne", venant se positionner sur le flanc de la réglette (1) et sur laquelle peuvent être enfichées des poignées (18) de cordons de brassage (59), cette demi-grille (13A,13B) étant conformée (14,15) pour d'une part être reliée électriquement au chassis métallique précité (53,54) lorsque la réglette (1) est en place sur celui-ci, et pour d'autre part, via un contact électrique (20) qui est respectivement complémentaire d'une dent (15) de cette demi-grille (13A,13B) et qui est prévu en conséquence dans la poignée (18) du cordon de brassage (59), assurer un contact de masse avec un fil de drain (23) ou écran alors prévu dans le cable (24) de ce cordon de brassage (59);
. et/ou une plaque rigide, telle qu'une plaque métallique prédécoupée en forme de peigne plat (38) ou une plaque de circuit imprimé (47), d'interconnexion de contacts arrière (36,37) de la réglette, apte à s' enficher solidement par l'arrière de la réglette, dans une fente longitudinale (39) prévue à cet effet dans cette dernière, de façon à venir s'insérer entre des plots dits "de coupure" (36,37) normalement prévus dans le fond de cette réglette.

2. Règlette selon la revendication 1, caractérisée en ce que ledit contact métallique latéral (2) est un contact élastique qui comporte deux branches élastiques (7,10) se raccordant sur un bord de pliure (6) de façon à former entre elles, et au repos, un angle (a) faible mais non-nul :
. une branche principale (7) dont l'extrémité libre (8) est conformée pour venir, lorsque cette branche (7) est enfichée à fond à travers un alvéole récepteur (9) prévu à cet effet sur le bord latéral (3,4) correspondant de la réglette (1), en appui conducteur contre le chassis métallique (53,54) récepteur de la réglette; et
. une autre branche élastique (10) prévue pour s'enficher avec jeu dans au moins un alvéole récepteur (11,12) de la réglette, ce dernier étant apte à recevoir aussi au moins un fil (5) de mise à la masse.

3. Réglette selon la revendication 2, caractérisée en ce que cette demi-grille (13A,13B) à dents (15) est pourvue d'un ou deux contacts latéraux (14) qui viennent au montage en contact conducteur étroit avec ledit contact métallique de masse (2), afin d'assurer ainsi leur liaison électrique avec ledit chassis récepteur (53,54).

4. Réglette selon l'une des revendications 1 à 3, caractérisée en ce que, des canaux passe-fils (29) ou des modules techniques (33) étant prévus pour s'adapter classiquement sur ses grandes faces latérales, ces canaux passe-fils (29) ou ces modules techniques (33) sont conformés, en particulier par le jeu d'encoches (31,35) et de protubérances (30) complémentaires l'une de l'autre et prévues à la fois sur ceux-ci (29,34) et sur la demi-grille (13A,13B), pour caler en position cette-demi-grille (13A,13B) sur la réglette (1).

5. Réglette selon l'une des revendications 1 à 4, caractérisée en ce qu'elle comporte des moyens (26,27) de détrompage de la position d'enfichage de la poignée (18) du cordon de brassage (59).

6. Réglette selon l'une des revendications 1 à 5, caractérisée en ce que chaque demi-grille à dents (13A,13B) comporte, entre chaque couple de dents de contact adjacentes (15), une dent supplémentaire (15A) apte à assurer un contact de masse pour en particulier un cordon de brassage ne comportant qu'une seule paire avec écran.

7. Réglette selon l'une des revendications 1 à 6, caractérisée en ce que la demi-grille à dents (13A,13B) est concue pour être plaquée contre la face latérale de la réglette (1) et de façon à venir se positionner sous le canal passe-fil (29), ce dernier s'opposant ainsi à l'extraction de cette demi-grille.

8. Réglette selon l'une des revendications 1 à 7, caractérisée en ce qu'elle comprend un cordon de brassage dont la poignée (18) comporte un contact (19) en forme de "U" dont les branches latérales (20) sont prévues pour venir chacunes frotter contre une dent (15) de la ou des demi-grilles (13A,13B), et dont la branche transversale (22) comporte des moyens (21) de connexion d'un fil de drain (23) qui est prévu, dans le câble (24) de ce cordon (59), pour être en contact électrique avec un écran métallique (64).

9. Réglette selon l'une des revendications 1 à 7, caractérisée en ce que des moyens (41,42) complémentaires sont prévus à la fois dans la réglette (1) et ladite plaque rigide arrière (38,47) pour retenir cette plaque dans cette réglette.

10. Réglette selon l'une des revendications 1 à 7, ou 9, caractérisée en ce que ladite plaque métallique rigide arrière en forme de peigne (38) est équipée de branches latérales (45,46) destinées à permettre sa connexion audit chassis métallique récepteur (53,54), soit par soudure d'un fil (43) de mise à la masse, soit par contact élastique direct (46) avec ce chassis.

11. Réglette selon l'une des revendications 1 à 7, ou 9, ou 10, caractérisée en ce que sa base arrière (49) est munie de deux organes d'appui (50,51) qui sont placés de part et d'autre de la partie centrale (52) de cette réglette (1), et largement écartés de celle-ci, de sorte qu'ainsi la réglette (1) peut-être fixée par enclipsage sur des chassis métalliques récepteurs de formes très différentes, et en particulier :
. soit sur un chassis métallique récepteur (53) à section en "U";
. soit sur un chassis métallique récepteur profilé (54), en forme de plaque plane (56) garnie dans sa partie centrale de nervures longitudinales (55).

12. Répartiteur équipé de réglettes selon l'une des revendications 1 à 7, ou 9 à 11, caractérisé en ce que ces réglettes (1A,1B,1C,1D) sont utilisées avec canaux passe-fils (29) dans le cas d'un câblage symétrique, tandis qu'elles sont utilisées, dans le cas d'un câblage à plat ou dans le cas d'un câblage avant-arrière, soit sans canaux passe-fils, soit avec certains canaux passe-fils, mais ceux-ci étant de type disposant de sorties symétriques .

## Patentansprüche

1. Kontaktleiste, insbesondere für Telefon- oder Datenleitungen, wobei die Leiste (1), deren Aufbau aus isolierendem Material besteht, mit einer Anordnung versehen ist zur Befestigung an einem metallischen, profilierten, mit der Masse verbundenen Aufnahmegestell (53, 54) und auf seiner kleinen Vorderfläche (16, 17A, 17B), d.h. auf der dem Aufnahmegestell (53, 54) gegenüberliegenden Seite, wenn die Leiste (1) in dieses eingesetzt ist, zwei Reihen metallischer automatisch abisolierender Anschlüsse aufweist, deren jeder den leitenden Kern eines elektrischen Drahtes aufnehmen kann, dadurch gekennzeichnet, daß sie, auf Wunsch, außer den Bauteilen wie Leiterdurchführungen (29) oder technische Module (33), die an den großen Seitenflächen befestigt werden, eines oder mehrere zusätzliche, besondere Bauteile aufweist, darunter:
- einen oder mehrere, seitlich und lösbar angeordnete, metallische Massenanschlüsse (2), deren jeder wenigstens einen Massenanschlußdraht (5) aufnehmen kann, wobei der oder diese metallische Anschlüsse (2) derart (8) ausgestaltet sind, daß sie sich in leitender Weise am metallischen Aufnahmegestell (53, 54) abstützen, wenn die Leiste (1) in letzteres eingesetzt ist;
- und/oder wenigstens ein längs ausgerichtetes metallisches mit Zähnen (15) versehenes Halbgitter (13A, 13B) (oder eine Kammstruktur), das an der Seite der Leiste (1) angeordnet wird zur Aufnahme von Steckern (18) für Leitungen (59), wobei das Halbgitter (13A, 13B) derart (14, 15) ausgestaltet ist, daß es einerseits elektrisch mit dem oben genannten metallischen Aufbau (53, 54) verbindbar ist, wenn die Leiste (1) in dieses eingesetzt ist und andererseits über einen elektrischen Anschluß (20), der entsprechend komplementär zu einem Zahn (15) des Halbgitters (13A, 13B) ausgestaltet ist, mit diesem verbindbar ist und der demzufolge im Stecker (18) der Leitung (59) vorgesehen ist, um so einen Massenanschluß mit einer Masseleitung (23) oder Abschirmung im Kabel (24) der Leitung (59) zu gewährleisten;
- und/oder eine steife Platte, z.B. eine metallische Platte, die vorab in Form einer flachen Kammstruktur (38) zugeschnitten ist oder einer Platte in Form einer gedruckten Schaltung (47) zur Verbindung der rückwärtigen Anschlüsse (36, 37) der Leiste, welche fest mit dem rückwärtigen Teil der Leiste verbindbar ist durch Eingriff in einen zu diesem Zweck in letzterer vorgesehenen Längsschlitz (39), dergestalt, daß sie zwischen den üblicherweise im Boden der Leiste vorgesehenen Anschluß- oder Schnittstellen (36, 37) eingreift.

2. Leiste nach Anspruch 1, dadurch gekennzeichnet, daß der seitliche metallische Anschluß (2) ein elastischer Anschluß ist, der zwei elastische Abschnitte (7, 10) aufweist, die entlang eines Knickrandes (6) dergestalt miteinander verbunden sind, daß sie zwischen sich und im Ruhezustand einenn spitzen endlichen Winkel (a) einschließen, nämlich:
- einen Hauptabschnitt (7), dessen freies Ende (8) so ausgestaltet ist, daß es beim Eingriff des Abschnitts (7) durch eine Aufnahmeöffnung (9) hindurch, die zu diesem Zweck am entsprechenden Seitenrand (3, 4) der Leiste (1) vorgesehen ist, sich in leitender Weise auf dem metallischen Aufbau (53, 54), welcher die Leiste aufnimmt, abstützt und
- einen weiteren elastischen Abschnitt (10), der mit Spiel in wenigstens eine Aufnahmeöffnung (11, 12) der Leiste eingreift und der in der Lage ist, wenigstens einen Massenanschlußdraht (5) aufzunehmen.

3. Leiste nach Anspruch 1, dadurch gekennzeichnet, daß das mit den Zähnen (15) versehene Halbgitter (13A, 13B) einen oder zwei seitliche Anschlüsse (14) aufweist, die während des Einbaus einen engen leitenden Kontakt mit dem metallischen Massenanschluß (2) herstellen, um so ihre elektrische Verbindung mit dem Aufnahmegestell (53, 54) herzustellen.

4. Leiste nach einem der Ansprüche 1 bis 3, dadurch gekennzeichnet, daß die Leiterdurchführungen (29) oder die technischen Module (33) so vorgesehen sind, daß sie in herkömmlicher Weise an den großen Seitenflächen angeordnet sind, wobei die Leiterdurchführungen (29) oder die technischen Module (33) insbesondere durch das Vorsehen von Aufnahmeöffnungen (31, 35) und daran angepaßte Vorsprünge (30), die zugleich an ihnen (29, 34) und auch am Halbgitter (13A, 13B) vorgesehen sind, dieses Halbgitter (13A, 13B) im Klemmeingriff an der Leiste (1) halten.

5. Leiste nach einem der Ansprüche 1 bis 4, dadurch gekennzeichnet, daß sie eine Anordnung (26, 27) für die korrekte Positionierung des Steckers (18) der Leitung (59) aufweist.

6. Leiste nach einem der Ansprüche 1 bis 5, dadurch gekennzeichnet, daß jedes mit Zähnen versehene Halbgitter (13A, 13B) zwischen jedem benachbarten Paar von Kontaktzähnen (15) einen zusätzlichen Zahn (15A) aufweist, um einen Massenanschluß zu gewährleisten, insbesondere für eine Leitung mit nur zwei abgeschirmten Leitern.

7. Leiste nach einem der Ansprüche 1 bis 6, dadurch gekennzeichnet, daß das mit Zähnen versehene Halbgitter (13A, 13B) so ausgelegt ist, daß es an der Seitenwand der Leiste (1) anliegt sowie derart, daß es unter die Leiterdurchführung (29) eingreifen kann, wobei letztere einem Herausziehen des Halbgitters entgegenwirkt.

8. Leiste nach einem der Ansprüche 1 bis 7, dadurch gekennzeichnet, daß sie eine Leitung aufweist, deren Stecker (18) einen U-förmigen Anschluß (19) aufweist, dessen Seitenabschnitte (20) jeweils im Reibkontakt mit einem der Zähne (15) des oder der Halbgitter (13A, 13B) stehen und dessen Querabschnitt (22) eine Verbindungsanordnung (21) für eine Anschlußleitung (23) aufweist, die im Kabel (24) der Leitung (59) vorgesehen ist für einen elektrischen Kontakt mit einer metallischen Abschirmung (64).

9. Leiste nach einem der Ansprüche 1 bis 7, dadurch gekennzeichnet, daß eine komplementäre Anordnung (41, 42) sowohl in der Leitung (1) als auch in der steifen rückwärtigen Platte (38, 47) vorgesehen ist, um diese Platte an der Leiste zu halten.

10. Leiste nach einem der Ansprüche 1 bis 7 oder 9, dadurch gekennzeichnet, daß die rückwärtige steife metallische Platte in Form einer Kammstruktur (38) mit seitlichen Abschnitten (45, 46) versehen ist, die zu einer Verbindung mit dem metallischen Aufnahmechassis (53, 54) dienen, entweder durch Lötverbindung eines Massenanschlußdrahtes (43) oder durch einen direkten elastischen Kontakt (46) mit dem Gestell.

11. Leiste nach einem der Ansprüche 1 bis 7 oder 9 oder 10, dadurch gekennzeichnet, daß das hintere Grundteil (49) mit zwei Stützteilen (50, 51) versehen ist, die beidseits des Mittenabschnitts (52) der Leiste (1) vorgesehen sind und einen großen Abstand zu ihr aufweisen, dergestalt, daß die Leiste (1) im Klemmsitz in das metallische Aufnahmegestell eingesetzt werden kann, welches verschiedene Gestalten aufweist, insbesondere in:
- ein metallisches Aufnahmegestell (53) mit U-förmigem Querschnitt,
- ein metallisches profiliertes Aufnahmegestell (54) in Form einer ebenen Platte (56), deren mittlerer Abschnitt mit Längsrippen (55) versehen ist.

12. Verteilkasten, welcher mit Leisten nach einen der Ansprüche 1 bis 7 oder 9 bis 11 versehen ist, dadurch gekennzeichnet, daß die Leisten (1A, 1B, 1C, 1D) verwendet werden mit Leiterdurchführungen (29), im Falle einer symmetrischen Verkabelung, während sie verwendet werden Falle einer flachen Verkabelung oder im Falle einer von vorne nach hinten verlaufenden Verkabelung entweder in Leiterdurchführungen oder in bestimmten Leiterdurchführungen, wobei letztere so ausgestaltet sind, daß sie symmetrische Auslässe besitzen.

## Claims

1. Interconnection strip, in particular for telephone or computer lines, this strip (1), whose body is made of insulating material, being equipped with means for fixation on a profiled metallic receiver chassis (53, 54) which is earthed, and comprising, on its small front face (16, 17A, 17B), i.e. on its small face which lies opposite this receiver chassis (53, 54) when the strip (1) is in place thereon, two rows of self-stripping metallic contacts which may each receive the conducting core of an electric wire, characterized in that it comprises as required, in addition to the functional elements of the conduit channel (29) or technical module (33) type which are provided to be fixed on its large lateral faces, one or more particular additional functional elements, of which:
. one or more metallic earth contacts (2), lateral and removable, each adapted to receive at least one earthing wire (5), this or these metallic contacts (2) being shaped (8) to come into conducting abutment against the metallic receiver chassis (53, 54) when the strip (1) is in place on the latter;
. and/or at least one longitudinal metallic half-grid (13A, 13B) with teeth (15), or "comb", coming into position on the side of the strip (1) and on which may be plugged handles (18) of mixing cords (59), this half-grid (13A, 13B) being shaped (14, 15) in order, on the one hand, to be electrically connected to the above-mentioned metallic chassis (53, 54) when the strip (1) is in place thereon, and, on the other hand, via an electric contact (20) which is respectively complementary of a tooth (15) of this half-grid (13A, 13B) and which is consequently provided in the handle (18) of the mixing cord (59), to ensure an earth contact with a drain wire (23) or screen provided in that case in the cable (24) of this mixing cord (59);
. and/or a rigid board, such as a metallic board pre-cutout in the form of a flat comb (38) or a printed circuit board (47), for interconnection of rear contacts (36, 37) of the strip, adapted to plug solidly by the rear of the strip, in a longitudinal slot (39) provided therein to that end, so as to be inserted between so-called "cut-out" studs (36, 37) normally provided in the bottom of this strip.

2. Strip according to Claim 1, characterized in that said lateral metallic contact (2) is an elastic contact which comprises two elastic branches (7, 10) joining on an edge of fold (6) so as to form therebetween, and at rest, a small but non-zero angle (a):
. a principal branch (7) of which the free end (8) is shaped to come, when this branch (7) is plugged completely through a receiver recess (9) provided to that end on the corresponding lateral edge (3, 4) of the strip (1), into conducting abutment against the metallic receiver chassis (53, 54) of the strip; and
. another elastic branch (10) provided to plug with clearance into at least one receiver recess (11, 12) of the strip, this latter being adapted also to receive at least one earthing wire (5).

3. Strip according to Claim 2, characterized in that this half-grid (13A, 13B) with teeth (15) is provided with one or two lateral contacts (14) which come, upon assembly, into close conducting contact with said metallic earth contact (2), in order thus to ensure their electrical link with said receiver chassis (53, 54).

4. Strip according to one of Claims 1 to 3, characterized in that, conduit channels (29) or technical modules (33) being provided to fit conventionally on its large lateral faces, these conduit channels (29) or these technical modules (33) are shaped, in particular by the set of notches (31, 35) and of protuberances (30) complementary of one another and provided both on the latter (29, 34) and on the half-grid (13A, 13B), to fit this half-grid (13A, 13B) in position on the strip (1).

5. Strip according to one of Claims 1 to 4, characterized in that it comprises means (26, 27) for locating the position of plugging of the handle (18) of the mixing cord (59).

6. Strip according to one of Claims 1 to 5, characterized in that each toothed half-grid (13A, 13B) comprises, between each couple of adjacent contact teeth (15), a supplementary tooth (15A) adapted to ensure an earth contact in particular for a mixing cord comprising only one pair with screen.

7. Strip according to one of Claims 1 to 6, characterized in that the toothed half-grid (13A, 13B) is designed' to be applied against the lateral face of the strip (1) and so as to come into position beneath the conduit channel (29), this latter thus opposing extraction of this half-grid.

8. Strip according to one of Claims 1 to 7, characterized in that it comprises a mixing cord of which the handle (18) comprises a U-shaped contact (19) whose lateral branches (20) are provided each to rub against a tooth (15) of the half-grid or grids (13A, 13B), and of which the transverse branch (22) comprises means (21) for connection of a drain wire (23) which is provided, in the cable (24) of this cord (59), to be in electrical contact with a metallic screen (64).

9. Strip according to one of Claims 1 to 7, characterized in that complementary means (41, 42) are provided both in the strip (1) and said rigid rear board (38, 47), to retain this board in this strip.

10. Strip according to one of Claims 1 to 7, or 9, characterized in that said rear rigid metallic board in the form of comb (38) is equipped with lateral branches (45, 46) intended to allow its connection to said metallic receiver chassis (53, 54), either by welding of an earthing wire (43) or by direct elastic contact (46) with this chassis.

11. Strip according to one of Claims 1 to 7, or 9 , or 10, characterized in that its rear base (49) is provided with two bearing members (50, 51) which are placed on either side of the central part (52) of this strip (1), and largely spaced apart therefrom, so that the strip (1) may thus be fixed by clipping on metallic receiver chassis of very different shapes, and in particular:
. either on a metallic receiver chassis (53) of U-section;
. or on a profiled metallic receiver chassis (54), in the form of a flat board (56) provided in its central part with longitudinal ribs (55).

12. Distributor equipped with strips according to one of Claims 1 to 7, or 9 to 11, characterized in that these strips (1A, 1B, 1C, 1D) are used with conduit channels (29) in the case of a symmetrical wiring, while they are used, in the case of a flat wiring or in the case of a front-to-back wiring, either without conduit channels or with certain conduit channels, but the latter being of type having symmetrical outputs.
